# EUROPÄISCHE PATENTSCHRIFT

(11) **EP 0 898 683 B1**
(45) Veröffentlichungstag und Bekanntmachung des Hinweises auf die Patenterteilung: **19.03.2003**
(21) Anmeldenummer: 97925862.1
(22) Anmeldetag: 23.05.1997
(51) Int. Cl.: F21W 111/06, F21K 7/00, E01F 9/06, H05B 37/02

(54) **LEUCHTEINRICHTUNG ZUR SIGNALABGABE, KENNZEICHNUNG ODER MARKIERUNG**
LIGHTING DEVICE FOR SIGNALLING, IDENTIFICATION OR MARKING
DISPOSITIF D'ECLAIRAGE POUR LA SIGNALISATION, LA CARACTERISATION OU LE MARQUAGE

(30) Priorität: 23.05.1996 DE 19620827
(43) Veröffentlichungstag der Anmeldung: 03.03.1999
(73) Patentinhaber: SIEMENS AKTIENGESELLSCHAFT, 80333 München (DE)
(72) Erfinder: VANDEVOORDE, Jean-Claude, B-1820 Steenkokkerzeel (BE)
(86) Internationale Anmeldenummer: DE9701049
(87) Internationale Veröffentlichungsnummer: WO97044613

(56) Entgegenhaltungen:
- EP-A- 0 390 479
- EP-A- 0 400 176
- EP-A- 0 658 655
- WO-A-95/19525
- WO-A-96/02970
- FR-A- 2 697 617
- FR-A- 2 713 747
- GB-A- 2 243 636
- GB-A- 2 264 002
- US-A- 4 650 998

## Beschreibung

Die Erfindung bezieht sich auf ein Unterflurfeuer zur Signalabgabe auf und zur Kennzeichnung von Verkehrsflächen nach dem Oberbegriff des Patentanspruchs 1.

Mittels der Halbleiterelemente eines derartigen Unterflurfeuers kann die Lichtabstrahlung einer vorstehend geschilderten Leuchteinrichtung in einer vorgegebenen Farbe erfolgen, ohne dass irgendwelche optischen Strahlungsfilterungen erforderlich wären. Die Halbleiterelemente erzeugen außerhalb des sicht- baren Bereichs kaum Strahlung, insbesondere kaum wärmeerzeugende Infrarot- oder Ultraviolettstrahlung. Der Energieaufwand für den Betrieb derartiger Halbleiterelemente bzw. eines Unterflurfeuers mit derartigen Halbleiterelementen ist somit gering.

Aus der FR-A-2 697 617 ist ein Unterflurfeuer zur Signalabgabe auf und zur Kennzeichnung von Verkehrsflächen bekannt, das als Halbleiterelemente, z.B. als lichtabstrahlende Dioden (LED) oder als lichtabstrahlende Polymere, ausgebildete Lichtquellen aufweist, wobei unterschiedliche Halbleiterelemente in Form von Clustern, die jeweils Licht in unterschiedlichen Farben abstrahlen, vorgesehen sind. Das dort beschriebene Unterflurfeuer ist als sog. "Spotlight" ausgebildet und dient zur Kennzeichnung der Kontur eines Decks oder von Operationszonen auf einem Deck eines Schiffes. Hierdurch soll für einen Hubschrauber oder ein ähnliches Luftfahrzeug die Möglichkeit geschaffen werden, sicher auf einem solchen Schiff zu landen.

In der EP-A-0 390 479 wird eine Diodenanordnung beschrieben, die zur Informationswiedergabe auf Anzeigedisplays dient, welche beispielsweise im Kraftfahrzeugverkehr eingesetzt werden. Mittels der Halbleiterelemente bzw. Dioden sollen auf der sie halternden Fläche Schrift- oder andere Zeichen gebildet werden, welche von vorbeifahrenden Kraftfahrern ohne größeren Aufwand aufnehmbar sind.

Der Erfindung liegt die Aufgabe zugrunde, ausgehend von dem vorstehend geschilderten Stand der Technik gemäß der FR-A-2 697 617 ein Unterflurfeuer zur Verfügung zu stellen, dessen Lichtabstrahlung in einfacher Weise an unterschiedliche Anforderungen und an unterschiedliche Lichtverhältnisse anpassbar ist.

Diese Aufgabe wird erfindungsgemäß durch die Merkmale im kennzeichnenden Teil des Patentanspruchs 1 gelöst. Erfindungsgemäß kann die Lichtabstrahlung des Unterflurfeuers durch Variation der Intensität, mit der die Halbleiterelemente Licht abstrahlen, an unterschiedlichste Verhältnisse angepasst werden. Da derartige Halbleiterelemente auch dann, wenn ihre Lichtabstrahlung hinsichtlich der Intensität geregelt wird, Licht mit einem Wellenlängenbereich abstrahlen, der sehr eng und konstant ist, ist die Farbe des von dem Unterflurfeuer abgestrahlten Lichts bei unterschiedlicher Intensität des abgestrahlten Lichts dieselbe. Die Anpassung der Lichtabstrahlung der Halbleiterelemente an von der Steuereinrichtung vorgegebene Änderungen erfolgt im Mikrosekundenbereich, wodurch das erfindungsgemäße Unterflurfeuer auch hohen Anforderungen genügen kann. Es hält ohne weiteres die im Flugverkehr bzw. für Flughäfen geltenden Standards, z.B. ICAO, FAA, DOT, CIE, MIL-C-25050 ein. Da beim erfindungsgemäßen Unterflurfeuer der Temperaturanstieg aufgrund des Betriebs der Lichtquellen weniger als 20 % des Temperaturanstiegs bei herkömmlichen Unterflurfeuern beträgt, können die Beanspruchungen von das Unterflurfeuer überquerenden Flugzeugreifen erheblich reduziert werden. Darüber hinaus kann das Risiko von Verbrennungen beim Betriebspersonal im wesentlichen ausgeschlossen werden.

Da die Steuereinrichtung des erfindungsgemäßen Unterflurfeuers die Pulsweitenmodulationsvorrichtung aufweist, ergibt sich für den Betrieb des erfindungsgemäßen Unterflurfeuers ein hoher Wirkungsgrad, wobei die zur Verfügung gestellte Energie mittels der Pulsweitenmodulationsvorrichtung in optimaler Weise an die Anforderungen des Unterflurfeuers bzw. die Anforderungen der Halbleiterelemente angepasst werden kann. Es ist keine thyristorgesteuerte Energieversorgung erforderlich, die ihrerseits typischerweise Harmonisierungs- und reaktive Verluste in der Hauptquelle verursachen würde. Darüber hinaus ergibt sich beim Betrieb des erfindungsgemäßen Unterflurfeuers kein stroboskopischer Effekt, der die korrekte Wahrnehmung des Unterflurfeuers beeinträchtigen könnte. Da mehrere Halbleiterelemente des Unterflurfeuers ein Cluster bilden, kann der Ausfall einzelner Halbleiterelemente kompensiert werden, da ein mehrere Halbleiterelemente aufweisendes Cluster auch dann noch funktionsfähig bleibt, wenn ein oder mehrere Halbleiterelemente ausfallen. Zu einem Cluster gehören gemäß Patentanspruch 13 vorteilhaft 2 bis 200, vorzugsweise 2 bis 30, Halbleiterelemente. In jedem Fall kann so ein Totalausfall des erfindungsgemäßen Unterflurfeuers zuverlässig verhindert werden, da aufgrund der insoweit redundanten Ausgestaltung der Cluster nicht jedweder Ausfall eines einzelnen Halbleiterelements unbedingt zum Austausch eines Clusters führen muss. Hierdurch kann der Aufwand für die Instandhaltung des erfindungsgemäßen Unterflurfeuers reduziert werden.

Da das erfindungsgemäße Unterflurfeuer unterschiedliche Halbleiterelemente zur Abstrahlung von Licht in unterschiedlichen Farben aufweist, kann bei der Weiterbildung gemäß Patentanspruch 2 das vom Unterflurfeuer abgestrahlte Licht auch hinsichtlich seiner Farbe beliebig eingestellt werden. Es ist somit möglich, mittels ein und desselben Unterflurfeuers Licht unterschiedlicher Farbe abzustrahlen. Der Wirkungsgrad eines solchen Unterflurfeuers kann dadurch erhöht werden, dass die Halbleiterelemente ihr Licht mit einer sehr schmalen Farbbandbreite und bei einer hohen Sättigung abstrahlen. Da sich die Farbe des abgestrahlten Lichts mit der Regelung der Intensität nicht spürbar ändert, kann eine Farbeinstellungsauswahl hinsichtlich des Wirkungsgrades erfolgen. Mit einem derart ausgestalteten erfindungsgemäßen Unterflurfeuer kann Licht praktisch im gesamten sichtbaren Farbbereich abgestrahlt werden, wobei alle technisch sinnvoll verwendbaren Farben möglich sind.

Hierbei ist keine mechanische Bewegung von Lampen, Filtern oder anderer physikalisch zu bewegender Teile erforderlich; die entsprechenden Eigenschaften des erfindungsgemäßen Unterflurfeuers ergeben sich aufgrund statischer, gesteuerter Bauteile. Durch die Addition von Farben, die durch einzelne Halbleiterelemente erzeugt werden, kann das vom menschlichen Auge sichtbare Licht jede Farbe aufweisen, da eine Auflösung des Lichts unterschiedlicher Halbleiterelemente nach zwei Bogenminuten entsprechend einer Entfernung von 0,5 m vom Unterflurfeuer nicht mehr auflösbar ist.

Zweckmäßigerweise ist das Unterflurfeuer gemäß Patentanspruch 3 mittels der zur Steuerung der Energieversorgung dienenden Steuereinrichtung schaltbar.

Gemäß Patentanspruch 4 kann die Ansprechempfindlichkeit der Halbleiterelemente an die übliche Ansprechempfindlichkeit von Glüh- bzw. Wolframhalogenlampen angepasst werden, so dass das erfindungsgemäße Unterflurfeuer mit herkömmlichen, Wolframhalogen- und Glühlampen aufweisenden Unterflurfeuern im gleichen System kombiniert werden kann.

Die Steuereinrichtung kann gemäß Patentanspruch 5 in Signalverbindung mit einer Zentraleinheit stehen.

Darüber hinaus kann gemäß Patentanspruch 6 mittels der Steuereinrichtung vorgegeben werden, in welche von mehreren möglichen Richtungen Licht abgestrahlt wird, sofern das Unterflurfeuer bidirektional oder omnidirektional ausgebildet ist.

Mittels dieser Steuereinrichtung ist gemäß Patentanspruch 7 die Abstrahlintensität und die Anzahl der Licht unterschiedlicher Farbe abstrahlenden Halbleiterelemente einstellbar, so dass mittels der erfindungsgemäßen Leuchteinrichtung Licht beliebiger Farbe in beliebiger Intensität abstrahlbar ist.

Darüber hinaus kann die Steuereinrichtung gemäß Patentanspruch 8 eine bestimmte Aufeinanderfolge von Aus- und gegebenenfalls unterschiedlichen Ein-Betriebszuständen einstellen.

Selbstverständlich ist es gemäß Patentanspruch 9 möglich, mittels der Steuereinrichtung den Betriebszustand und die Funktionsfähigkeit der als Lichtquelle fungierenden Halbleiterelemente zu überwachen.

Gemäß Patentanspruch 10 ist es möglich, das beim Betrieb eines Flughafens besonders wichtige variable weiße Licht in jedweder gewünschten Form abzustrahlen. Hierdurch kann das Unterflurfeuer in optimaler Weise an unterschiedliche klimatische Bedingungen angepasst werden, wobei darüber hinaus selbstverständlich auch unterschiedliche Lichtverhältnisse berücksichtigt werden können. Da rot, blau und grün an den äußeren Ecken eines Farbdreiecks angeordnet sind und das Unterflurfeuer entsprechende Halbleiterelemente in der gewünschten Anzahl aufweisen kann, können mittels dieses Unterflurfeuers sämtliche Farben erzeugt werden. Darüber hinaus können mittels des erfindungsgemäßen Unterflurfeuers praktisch beliebig vorgebbare Anforderungen hinsichtlich der Lichtausbreitung ohne weiteres erfüllt werden.

Sofern mittels des erfindungsgemäßen Unterflurfeuers lediglich rotes, gelbes, orangenes oder grünes Licht abgestrahlt werden soll, ist die Ausgestaltung gemäß Patentanspruch 11 ausreichend. Blaues Licht abstrahlende Halbleiterelemente sind in diesem Fall nicht erforderlich, da sie für die Lichtabstrahlung in den vorstehend erwähnten Farben keine Bedeutung haben. Sofern Licht nur in den genannten vier Farben, nämlich rot, gelb, orange und grün, erzeugt werden soll, führt der Verzicht auf blaues Licht abstrahlende Halbleiterelemente dazu, dass das erfindungsgemäße Unterflurfeuer bei gleicher möglicher Lichtintensität mit geringeren Abmessungen gestaltet werden kann.

Gemäß Patentanspruch 12 kann u.U. eine dichtere Besetzung eines Substrats mit Halbleiterelementen erzeugt werden.

Das erfindungsgemäße Unterflurfeuer kann gemäß den Patentansprüchen 14 und 15 hinsichtlich seiner räumlichen Lichtverteilung entsprechend den vorgegebenen Anforderungen optimiert werden. Die globalen fotometrischen Eigenschaften des Unterflurfeuers werden durch die Clusteranordnung bestimmt.

Bei einer vorteilhaften Ausführungsform des erfindungsgemäßen Unterflurfeuers sind die Halbleiterelemente eines Clusters, die vorzugsweise gemäß Patentanspruch 17 fassungsfrei ausgebildet sind, gemäß Patentanspruch 16 auf einem gemeinsamen Substrat angeordnet.

Die Ausgestaltung gemäß Patentanspruch 18 gewährleistet, dass die Strahlungsanteile der Halbleiterelemente, die nicht in Richtung auf die Strahlenaustrittsfläche des Clusters bzw. des Unterflurfeuers gerichtet sind, weitestgehend dorthin umgelenkt werden.

Gemäß Patentanspruch 19 kann die Abstrahlrichtung des Unterflurfeuers je nach Positionierung der Spiegeloberfläche praktisch beliebig vorgesehen werden.

Gemäß Patentanspruch 20 ergibt sich eine gleichmäßige und damit als angenehm empfundene Lichtabstrahlung des Unterflurfeuers.

Ein gemäß Patentanspruch 21 ausgebildetes erfindungsgemäßes Unterflurfeuer kann auf einem Flughafen zur Mittellinienanzeige eines geraden Taxiways und auch als Halteleuchte eingesetzt werden.

Sofern die zwei Clusteranordnungen gemäß Patentanspruch 22 vorgesehen sind, kann das erfindungsgemäße Unterflurfeuer auf gekrümmten Abschnitten von Taxiways zur Anzeige der Mittellinie derselben oder als Halteleuchte zum Einsatz kommen.

Bei Clusteranordnungen gemäß Patentanspruch 23 kann eine Optimierung der räumlichen Verteilung des von dem Unterflurfeuer abgestrahlten Lichts erreicht werden.

Sofern das Unterflurfeuer gemäß Patentanspruch 24 omnidirektional ausgebildet ist, sind seine Clusteranordnungen vorteilhaft gekrümmt ausgebildet und bilden einen Kreis bzw. einen Zylindermantel.

Sofern das Unterflurfeuer in zwei Richtungen Licht abstrahlen soll, ist die Ausgestaltung gemäß Patentanspruch 25 vorteilhaft.

Sofern das Unterflurfeuer omnidirektional Licht abstrahlen soll, ist eine Anordnung gemäß Patentanspruch 26 vorteilhaft. Es sind jedoch auch andere Anordnungen der Halbleiterelemente möglich.

Durch die reflektierende Ausgestaltung der den Halbleiterelementen zugewandten Seite des Substrats kann im Zusammenwirken mit den Strahlungsaustrittabschnitten der Halbleiterelemente gemäß Patentanspruch 27 selbst ein elementares optisches System geschaffen werden. Der Einsatz und die Verteilung des erzeugten Lichts kann hierdurch optimal gestaltet werden.

Durch die Ausgestaltung gemäß Patentanspruch 28 ergeben sich hinsichtlich des Gewichts sowie der Herstellungsmöglichkeiten erhebliche Vorteile.

Bei der Weiterbildung gemäß Patentanspruch 29 entfällt jedweder hohler Konvektionsraum.

Gemäß Patentanspruch 30 kann die Lichtabstrahlung des Unterflurfeuers, beispielsweise gemäß Patentanspruch 31 durch Bündelung und Ausrichtung der Strahlen, verbessert werden.

Durch die Ausgestaltung gemäß Patentanspruch 32 kann eine Hochleistungsoptik geschaffen werden, mittels der die Lichtabstrahlung optimal ausformbar ist, so dass sie den bereits eingangs erwähnten Anforderungen im Flughafenbetrieb in jedem Fall genügt.

Gemäß Patentanspruch 33 kann der Wartungsaufwand für das Unterflurfeuer reduziert werden.

Zweckmäßigerweise sollte die Außenseite der Abdeckplatte selbstreinigend ausgebildet sein, wozu die Abdeckplatte gemäß Patentanspruch 34 in geeigneter Weise zu beschichten ist.

Eine kompakte Ausgestaltung des Unterflurfeuers kann gemäß Patentanspruch 35 erreicht werden.

Gemäß Patentanspruch 36 kann der Nutzen des vorstehend erläuterten elementaren optischen Systems, zu dem die reflektierende Ausgestaltung der den Halbleiterelementen zugewandten Seite des Substrats sowie die asphärische Linse am Abstrahlabschnitt der Halbleiterelemente gehören, aufrecht erhalten werden.

Bei der vorteilhaften Ausführungsform gemäß Patentanspruch 37 werden optische Verluste an der Übergangsfläche zwischen dem Füllkörper und der Abdeckplatte eliminiert.

Zur weiteren Vereinfachung des Zusammenbaus, des Umbaus oder der Reparatur des erfindungsgemäßen Unterflurfeuers ist die Ausgestaltung gemäß Patentanspruch 38 vorteilhaft, bei der ein Austausch einer Kassette in situ erfolgen kann.

Gemäß Patentanspruch 39 kann die Kassette ausschließlich entsprechend ihrer im Unterflurfeuer vorgegebenen Anordnung eingebaut werden; hierdurch werden Fehler beim Insitu-Ersatz derartiger Kassetten nahezu unmöglich gemacht.

Vorteilhaft kann die Typcodierung gemäß Patentanspruch 40 realisiert sein, wobei die Vorsprünge bzw. Vertiefungen sowohl im Falle der Kassette als auch im Falle der unterflurfeuerseitigen Halterung zu deren Verstärkung und Widerstandsfähigkeit gegen Scherbeanspruchungen beitragen. Mittels der Halterung können auf die Kassette eingeleitete Lasten und Beanspruchungen auf die Fahrbahn übertragen werden, wobei es sich hier sowohl um mechanische, nämlich statische und dynamische Lasten, als auch um thermische Belastungen handeln kann, die aus dem Erfordernis der Wärmeabfuhr resultieren. Zum Anschluss der Kassette ist an der Halterung eine gegen die Umgebung abgedichtete Fassung für elektrische Kontakte vorgesehen; um die Kassette in der gewünschten Weise an eine Energieversorgung anzuschließen, kann die Halterung auch ein Energieversorgungs- und Steuerungsteil aufweisen.

Galvanische Korrosion lässt sich vorteilhaft gemäß Patentanspruch 41 vermeiden.

Gemäß Patentanspruch 42 kann die thermische Ableit- und die Belastungsaufnahmefähigkeit der Kassette gesteigert werden. Der thermische Widerstand zwischen den in der Kassette vorhandenen Clustern wird abgesenkt, so dass die Wärmeübertragung zwischen den Clustern und dem Grundkörper bzw. dem Gehäuse der Kassette auf thermischer Leitung anstelle von Konvektion beruht. Da innerhalb der Kassette keine Hohlräume vorgesehen sind, ist die Kassette inhärent wasser- und gasdicht.

Bei der Weiterbildung gemäß Patentanspruch 43 kann der Temperaturgradient innerhalb der Kassette reduziert werden.

Gemäß Patentanspruch 44 können auf Abrieb, Kratzer oder Punktlasten zurückgehende Beschädigungen der Kassette weitestgehend vermieden werden. Darüber hinaus kann eine solche Verstärkung insbesondere an den Befestigungspunkten der Kassette dazu führen, dass die Last- und Scherbeanspruchungen besser am Aufnahmeteil des Unterflurfeuers verteilt werden können. Nach außen exponierte Oberflächen der Kassette oder des gesamten Unterflurfeuers können mittels Saphir oder entsprechendem Glas gehärtet sein, so dass eine Wirkungsgradabschwächung des Unterflurfeuers aufgrund von Abrieb, physikalischen oder chemischen Beschädigungen vermieden wird.

Durch die Abwesenheit von Hohlräumen wird erreicht, dass bei Überfahrung des Unterflurfeuers durch ein Fahr- oder Flugzeug das Unterflurfeuer bzw. die dieses ausbildenden Kassetten nicht mit Biegespannungen, sondern ausschließlich mit Druckspannungen beaufschlagt werden.

Der Einsatz gemäß Patentanspruch 45 vorteilhaft vorgesehener Werkstoffe für Unterflurfeuer an Flughäfen war bisher nicht praktikabel, da die als Lichtquellen eingesetzten Wolframhalogen- und Glühlampen zu hohe Temperaturen erzeugten. Da die im Falle der Erfindung einsetzbaren nichtmetallischen und elektrisch nichtleitenden Werkstoffe elektrisch isolierend sind, tritt keine galvanische Korrosion auf. Der im Falle des erfindungsgemäßen Unterflurfeuers vorgesehene Werkstoff ist mit einem geringen Aufwand in praktisch jede Gestalt formbar. Er kann darüber hinaus als Wärmeleiter dienen, um die vom Unterflurfeuer erzeugte Wärme zum das Unterflurfeuer aufnehmenden Montageteil bzw. zur Fahrbahn abzuleiten. Da der gesamte Grundkörper bzw. das gesamte Gehäuse des erfindungsgemäßen Unterflurfeuers durch die Auswahl des nunmehr einsetzbaren Werkstoffs als Isolator ausgestaltbar ist, ist kein kostenaufwendiger separater Isolator erforderlich. Für den Grundkörper bzw. das Gehäuse des Unterflurfeuers kann ein recyclebarer Kunststoff eingesetzt werden, wodurch sich die daraus resultierenden ökologischen Vorteile ergeben. Da die nunmehr zur Ausgestaltung des erfindungsgemäßen Unterflurfeuers einsetzbaren Werkstoffe eine erheblich höhere Lebensdauer im Vergleich zum Stand der Technik aufweisen, verlängern sich die Nutzungszyklen des erfindungsgemäßen Unterflurfeuers entsprechend.

Im folgenden wird die Erfindung anhand von Ausführungsformen unter Bezugnahme auf die Zeichnung näher erläutert.

Es zeigen:
- FIG 1: eine prinzipielle Darstellung eines als lichtabstrahlende Diode ausgebildeten Halbleiterelements;
- FIG 2: bis 4 prinzipiell in Vorder-, Seiten- und Oberansicht eine erste Ausführungsform eines Clusters eines erfindungsgemäßen Unterflurfeuers;
- FIG 5: bis 7 prinzipiell in Vorder-, Seiten- und Oberansicht eine zweite Ausführungsform eines Clusters des erfindungsgemäßen Unterflurfeuers;
- FIG 8: eine Draufsicht auf ein erstes Ausführungsbeispiel des erfindungsgemäßen Unterflurfeuers;
- FIG 9: eine Draufsicht auf ein zweites Ausführungsbeispiel des erfindungsgemäßen Unterflurfeuers;
- FIG 10: eine Draufsicht auf ein drittes Ausführungsbeispiel des erfindungsgemäßen Unterflurfeuers;
- FIG 11: eine Schnittdarstellung des z.B. in FIG 8 dargestellten Ausführungsbeispiels des erfindungsgemäßen Unterflurfeuers;
- FIG 12: eine FIG 11 entsprechende Darstellung, wobei das Unterflurfeuer aus Clustern gemäß den FIG 5 bis 7 ausgebildet ist;
- FIG 13 bis 16: Prinzipdarstellungen von unterschiedliche Halbleiterelemente aufweisenden Clustern;
- FIG 17: eine Darstellung der für Flughafenbefeuerungsanlagen vorgesehenen festgelegten Farben;
- FIG 18: eine Prinzipdarstellung der Steuerung, Regelung und Überwachung von Flughafenbefeuerungsanlagen;
- FIG 19: eine Prinzipdarstellung der Ausgangsseite einer Pulsweitenmodulationsvorrichtung des erfindungsgemäßen Unterflurfeuers;
- FIG 20: eine Steuereinrichtung des erfindungsgemäßen Unterflurfeuers; und
- FIG 21: eine abgewandelte Steuereinrichtung des erfindungsgemäßen Unterflurfeuers.

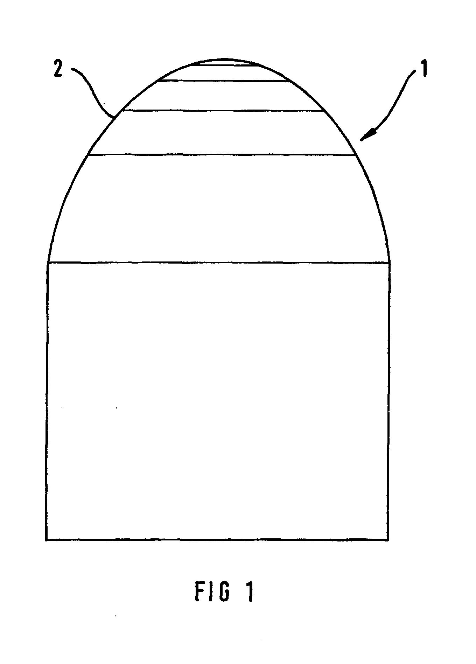

Ein erfindungsgemäßes Unterflurfeuer hat eine Vielzahl von Halbleiterelementen, die im Falle der im folgenden beschriebenen Ausführungsformen als lichtabstrahlende Dioden 1 ausgebildet sind. Die in FIG 1 im Prinzip dargestellte lichtabstrahlende Diode 1 hat in demjenigen Bereich, in dem das erzeugte Licht aus der Diode 1 austritt, eine Ausgestaltung als asphärische Linse 2, wie dies insbesondere in FIG 1 dargestellt ist.

Durch die asphärische Ausgestaltung der lichtbrechenden Linse 2 kann die Verteilung des durch die Diode 1 abgestrahlten Lichts optimiert werden.

Bei der lichtabstrahlenden Diode 1 handelt es sich insbesondere um eine helle bzw. superhelle LED.

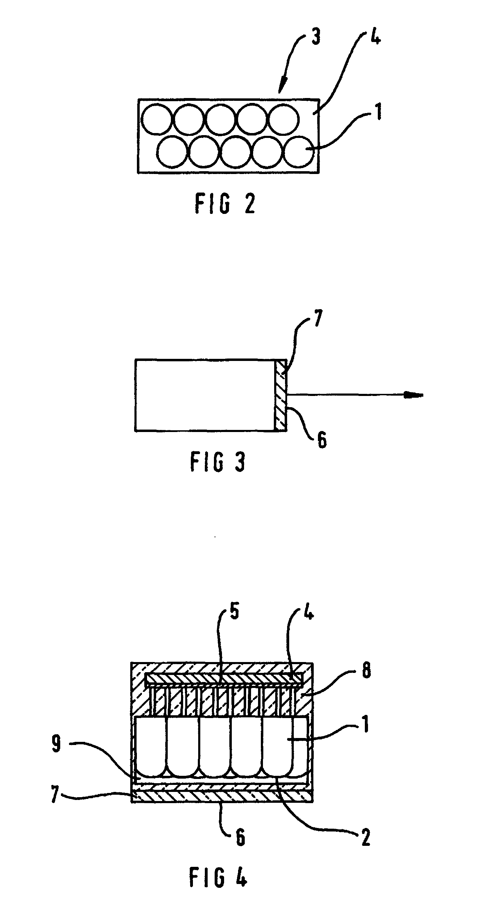

Das erfindungsgemäße Unterflurfeuer setzt sich aus einer Vielzahl der vorstehend beschriebenen lichtabstrahlenden Dioden 1 zusammen. Eine Mehrzahl derartiger lichtabstrahlender Dioden 1 kann zu einem in den FIG 2 bis 4 dargestellten Cluster 3 zusammengefasst sein. Bei dem in FIG 2 bis 4 dargestellten Ausführungsbeispiel hat das Cluster 3 zehn lichtabstrahlende Dioden 1, die in zwei übereinander angeordneten Reihen zu je fünf lichtabstrahlenden Dioden 1 angeordnet sind.

Es ist möglich, dass die Mittellinien der Dioden 1 einer Reihe in bezug auf die Mittellinien der Dioden 1 einer benachbarten Reihe geneigt angeordnet sind.

Sämtliche lichtabstrahlende Dioden 1 diese Clusters 3 sind fassungsfrei auf einem Substrat 4 angeordnet, welches als Halterung für die lichtabstrahlenden Dioden 1 dient. Das Cluster 3 hat ein elementares optisches System, zu dem eine reflektierende Schicht 5 gehört, die auf der den lichtabstrahlenden Dioden 1 zugewandten Seite des Substrats 4 aufgebracht ist. Zu diesem elementaren optischen System gehören die asphärischen Linsen 2 der lichtabstrahlenden Dioden 1, die den Einsatz und die Verteilung des durch die lichtabstrahlenden Dioden 1 erzeugten Lichts optimieren. Die asphärische Linse 2 bildet jeweils die eigentliche aktive Oberfläche bzw. die Lichtaustrittöffnung der lichtabstrahlenden Dioden 1.

Das in den FIG 2 bis 4 dargestellte Cluster 3 ist als mit anderen gleichartigen oder ähnlichen Clustern 3 zusammenfügbares Modulteil ausgestaltet. An der Strahlungsaustrittfläche 6 ist das Cluster 3 mittels einer Abdeckplatte 7 geschlossen, die bei dem in den FIG 2 bis 4 dargestellten Cluster 3 parallel zum Substrat 4 angeordnet ist. Die Strahlungsaustrittfläche 6 des Clusters 3 entspricht hinsichtlich ihren Abmessungen im wesentlichen der Fläche des Substrats 4, die nahezu vollständig von den lichtabstrahlenden Dioden 1 abgedeckt ist.

Die lichtabstrahlenden Dioden 1 des Clusters 3 sind von einem den Raum zwischen dem Substrat 4 und der Abdeckplatte 7 ausfüllenden Füllkörper 8 umgeben, der aus einem transparenten Werkstoff, z.B. aus einem Harz, hergestellt ist. Der Füllkörper 8 hat eine Aussparung 9, die unmittelbar dem durch die asphärischen Linsen 2 der lichtabstrahlenden Dioden 1 des Clusters 3 gebildeten Abstrahlabschnitt des Clusters 3 zugeordnet ist; die Aussparung 9 wird zwischen der aktiven Oberfläche der lichtabstrahlenden Dioden 1 des Clusters 3 und dem Füllkörper 8 ausgebildet, um den Nutzen des durch die reflektierende Schicht 5 des Substrats 4 und die asphärischen Linsen 2 der lichtabstrahlenden Dioden 1 gebildeten elementaren optischen Systems nicht zu verlieren.

Der Brechungsindex des den Füllkörper 8 bildenden Werkstoffs entspricht zweckmäßigerweise demjenigen des die Abdeckplatte 7 bildenden Werkstoffs. Hierdurch können optische Verluste an der Kontaktfläche zwischen dem Füllkörper 8 und der Abdeckplatte 7 verhindert werden.

Die Außenseite der Abdeckplatte 7 des Clusters 3 ist gehärtet und glatt ausgestaltet; sie kann darüber hinaus selbstreinigend sein.

Bei der Ausführungsform des Clusters 3, wie sie in den FIG 2 bis 4 dargestellt ist, ist die durch den Pfeil in FIG 3 dargestellte Abstrahlrichtung des Clusters 3 senkrecht zur Ebene des Substrats 4 angeordnet.

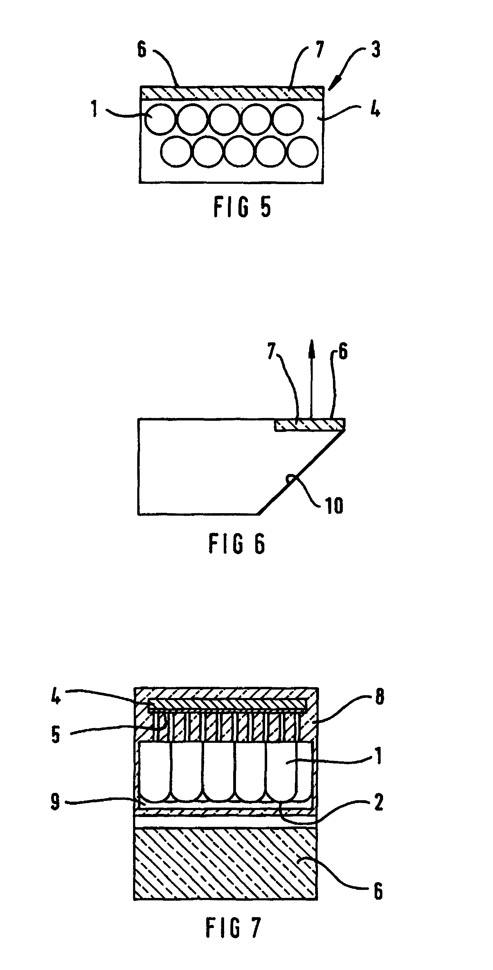

Bei der anhand der FIG 5 bis 7 dargestellten Ausführungsform des Clusters 3 wird die durch den Pfeil in FIG 6 dargestellte Abstrahlrichtung des Clusters 3 um 90 Grad abgelenkt, wozu eine zwischen den lichtabstrahlenden Dioden 1 und der Strahlungsaustrittfläche 6 des Clusters 3 angeordnete Spiegeloberfläche 10 vorgesehen ist. Die Spiegeloberfläche 10 richtet die Lichtstrahlen im dargestellten Ausführungsbeispiel um 90 Grad um, so dass sie parallel zur Ebene des Substrats 4 aus dem Cluster 3 durch dessen Strahlungsaustrittfläche 6 bzw. durch dessen Abdeckplatte 7 austreten.

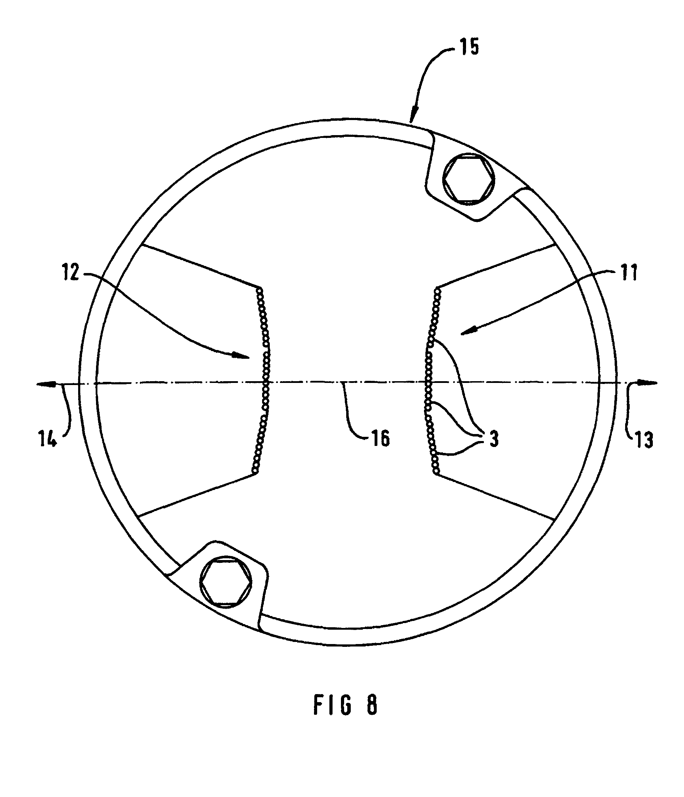

In FIG 8 ist ein Taxiway-Mittel- und Haltelicht für einen geradlinigen Abschnitt eines Taxiway dargestellt. Hierbei handelt es sich um ein sog. bidirektionales Unterflurfeuer, mit einer ersten Clusteranordnung 11, die in die eine, durch den Pfeil 13 gekennzeichnete Richtung abstrahlt, und einer zweiten Clusteranordnung 12, die in die zu der der Clusteranordnung 11 entgegengesetzte Richtung, die durch den Pfeil 14 gekennzeichnet ist, abstrahlt.

Bei dem in FIG 8 dargestellten Unterflurfeuer handelt sich um eine kompakte Einrichtung, wobei die beiden Clusteranordnungen 11, 12 in einem gemeinsamen Gehäuse 15 angeordnet sind. Derjenige Bereich des Innenraums des Gehäuses 15, der zwischen den beiden Clusteranordnungen 11, 12 sowie in FIG 8 seitlich der beiden Clusteranordnungen 11, 12 angeordnet ist, ist mit einem geeigneten Werkstoff gefüllt. Das Gehäuse 15 kann metallisch ausgebildet sein.

Außer, dass sie in unterschiedliche Richtungen abstrahlen, entsprechend die Clusteranordnungen 11, 12 einander, so dass im folgenden lediglich die in FIG 8 rechte Clusteranordnung 11 im einzelnen beschrieben wird.

Die Clusteranordnung 11 hat drei Cluster 3, die in einer Reihe nebeneinander angeordnet sind, wobei jedes dieser Cluster 3 beispielsweise die anhand der FIG 2 bis 4 dargestellte Ausführungsform aufweisen kann. Das mittlere Cluster 3 ist rechtwinklig zur Mittellinie 16 des Taxiway angeordnet, wobei es diese Mittellinie 16 in seinem mittleren Bereich schneidet. Die beiden äußeren Cluster 3 schließen mit dem mittleren Cluster 3 jeweils einen Winkel ein, der geringfügig kleiner als 180 Grad ist. Hierdurch wird eine effiziente horizontale Lichtverteilung erreicht. Die Abdeckung des in FIG 8 dargestellten Unterflurfeuers hat eine gehärtete, glatte und damit in einfacher Weise reinigbar ausgestaltete Außenfläche.

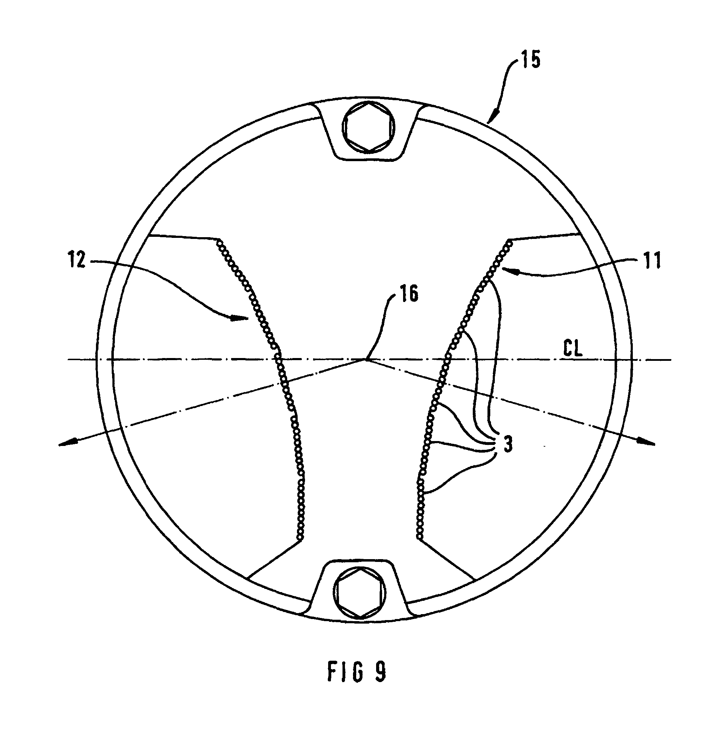

Das in FIG 9 dargestellte Unterflurfeuer dient ebenfalls zur Markierung der Mittellinie eines Taxiways, jedoch an einem gekrümmten Abschnitt desselben, und als ein dort einsetzbares Haltelicht. Es unterscheidet sich vom in FIG 8 dargestellten Unterflurfeuer dadurch, dass die Abstrahlrichtungen der beiden Clusteranordnungen 11, 12 zueinander geneigt sind und dass je Clusteranordnung 11, 12 fünf einzelne Cluster 3 vorgesehen sind, bei denen es sich ebenfalls um solche der in den FIG 2 bis 4 dargestellten Ausführungsformen handeln kann. Das mittlere Cluster 3 der beiden Clusteranordnungen 11, 12 ist, da es sich um einen gekrümmten Abschnitt des Taxiway handelt, zur Mittellinie CL des Unterflurfeuers versetzt und geneigt. Die Cluster 3 der beiden Clusteranordnungen 11, 12 schließen mit dem jeweils benachbarten Cluster 3 ebenfalls einen Winkel Alpha ein, der etwas kleiner als 180 Grad ist.

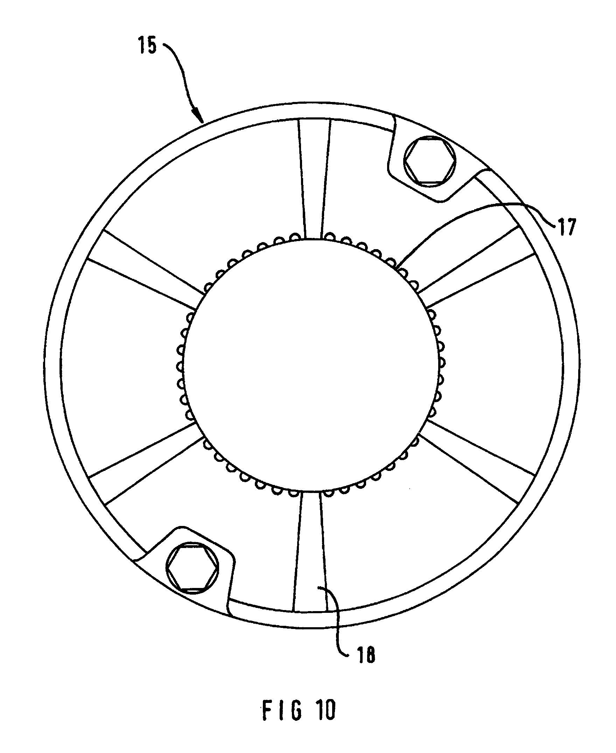

FIG 10 zeigt ein in sämtliche Richtungen wirkendes Unterflurfeuer, das ebenfalls zur Markierung eines Taxiway vorgesehen sein kann. Bei der dargestellten Ausführungsform sind sechs gekrümmte Cluster 17 vorgesehen, die miteinander einen geschlossenen Kreis bilden und voneinander durch Strukturrippen 18 getrennt sind. Mittels der sechs gekrümmten Cluster 17 kann Licht praktisch in alle Richtungen abgestrahlt werden.

Bei den vorstehend anhand der FIG 8 bis 10 beschriebenen Unterflurfeuer kann die äußere optische Oberfläche transparent und hart ausgestaltet sein, z.B. aus Saphir oder Glas mit einer gehärteten Oberfläche, so dass eine Wirkungsgradabschwächung der Unterflurfeuer aufgrund von Abrieb und physikalischen oder chemischen Beschädigungen vermieden wird. Die äußere optische Oberfläche kann derart gehärtet bzw. beschichtet sein, dass etwaige fresnell sche Verluste reduziert werden.

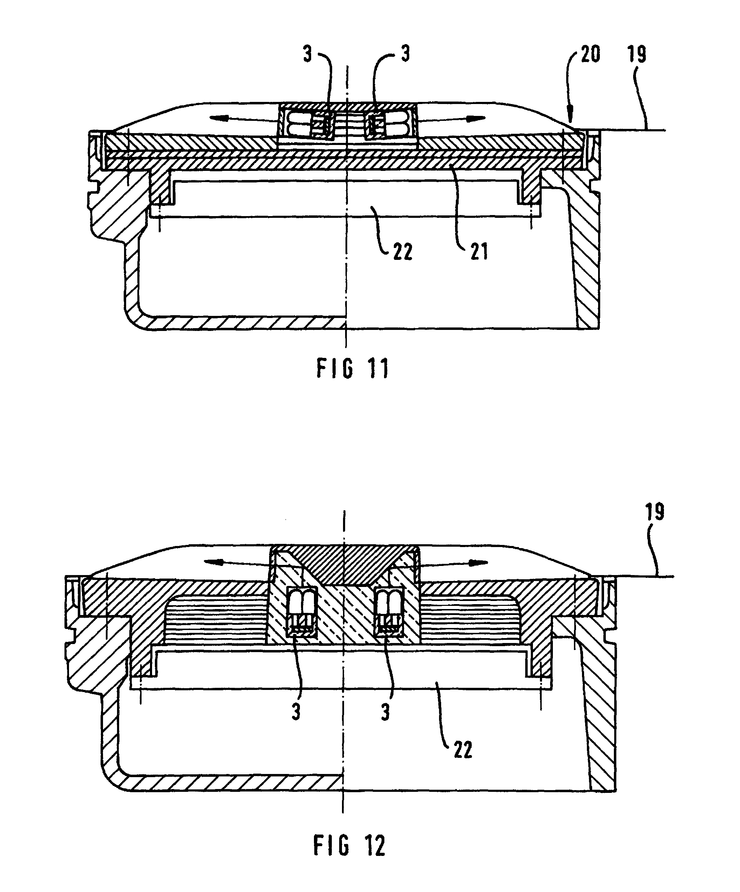

In den FIG 11 und 12 sind Querschnitte von Unterflurfeuern dargestellt, die etwa den in den FIG 8 bis 10 dargestellten Unterflurfeuern entsprechen. Sie unterscheiden sich im wesentlichen dadurch, dass in FIG 11 Cluster 3 der anhand der FIG 2 bis 4 beschriebenen Ausführungsform eingesetzt werden, wohingegen im Falle des Unterflurfeuers gemäß FIG 12 Cluster der anhand der FIG 5 bis 7 erläuterten Ausführungsform zum Einsatz kommen.

Das Unterflurfeuer gemäß FIG 11 und 12 ist mit wesentlichen Teilen unterhalb des Bodenniveaus 19 angeordnet. Die in den FIG 11 und 12 dargestellten Pfeile kennzeichnen die Abstrahlrichtungen der Unterflurfeuer. Wie insbesondere aus FIG 11 hervorgeht, ist der das bzw. die Cluster 3 aufweisende Teil des Unterflurfeuers in Form einer Kassette 20 ausgestaltet, die als solche eine ohne großen Aufwand austauschbare Einheit bildet. Ein derartiges Unterflurfeuer kann eine oder mehrere solcher Kassetten 20 aufweisen. Je nach Ausgestaltung des Unterflurfeuers können mehrere gleichartige oder ggf. auch unterschiedliche Kassetten zum Unterflurfeuer zusammengestellt sein.

Eine solche Kassette 20 ist in einer vorteilhaften Ausführungsform bauartcodiert, wobei die Bauartcodierung ihrer Anordnung innerhalb des Unterflurfeuers entspricht. Hierdurch werden Fehler bei einem Insitu-Ersatz der Kassette 20 nahezu unmöglich. Die Bauartcodierung kann durch kassettenseitige Vorsprünge oder Aussparungen verwirklicht sein, wobei dann entsprechende Aussparungen bzw. Vorsprünge in einem Aufnahmeteil 21 des Unterflurfeuers vorgesehen sind. Derartige reliefartige Ausgestaltungen bzw. mit Eindrücken versehene Ausgestaltungen der Kassette 20 bzw. des Aufnahmeteils 21 können darüber hinaus zur Widerstandsfähigkeit gegen Scherbeanspruchungen beitragen.

Der Grundkörper bzw. das Gehäuse der Kassette 20 ist ganz oder teilweise mit einem elektrisch nichtleitenden Werkstoff gefüllt, z.B. einem Harz oder Kunststoff; hierdurch wird galvanische Korrosion vermieden. Dem nichtleitenden Werkstoff kann ein thermisch leitendes Material, beispielsweise Glas, beigegeben sein, um so die thermische Ableit- und die Belastungsaufnahmefähigkeit der Kassette 20 zu steigern.

Die Wärmeübertragung zwischen den Clustern 3 und dem Grundkörper bzw. dem Gehäuse der Kassette 20 basiert dann auf thermischer Leitung anstelle von Luft-/Gas-Konvektion, so dass der thermische Widerstand der Kassette 20 erheblich reduziert ist.

Da kein Konvektionsgas vorhanden ist, führen etwaige Flugzeug- oder Kraftfahrzeuglasten, die auf die Kassette 20 wirken, nicht zu Biege-, sondern ausschließlich zu Druckspannungen, die einfacher aufgenommen bzw. abgeleitet werden können.

Da innerhalb der Kassette 20 keine Hohlräume und damit kein Konvektionsgas vorhanden ist, ist die Kassette 20 inhärent wasser- und gasdicht.

Der in der Kassette 20 stattfindende Temperaturanstieg beträgt lediglich weniger als 20 % des Temperaturanstiegs bei einem Unterflurfeuer mit einer herkömmlichen Wolframhalogenlichtquelle, so dass Flugzeug- oder Fahrzeugreifen weitaus geringer beansprucht werden und Verbrennungen von Betriebsund Wartungspersonal ausgeschlossen werden können.

Die Bodenwand der Kassette 20 kann durch einen Wärmeleiter, z.B. rostfreien Stahl oder beschichtetes Aluminium, ausgebildet sein; hierdurch wird der Temperaturgradient innerhalb der Kassette 20 reduziert.

Die Außenseite der Kassette 20 kann gehärtet, z.B. aus einem rostfreien Stahl, ausgebildet sein, so dass auf Abrieb, Kratzer oder Punktlasten zurückgehende Beschädigungen vermieden werden.

Befestigungspunkte der Kassette 20 können verstärkt ausgebildet sein, so dass Last- und Scherbeanspruchungen auf der die Kassette 20 lagernden Struktur bzw. dem Aufnahmeteil 21 besser verteilt werden können.

Die Einleitung von Energie bzw. die Übertragung von Signalen zur Kassette 20 wird durch selbstreinigende und selbstabdichtende Kontakte bewerkstelligt. Ein wasser- und dampfdichter Schutz gegen die Umgebung ist vorgesehen.

Aufgrund der Ausgestaltung des Unterflurfeuers mit lichtabstrahlenden Dioden 1 geschieht die elektrische Energieübertragung zwischen der Kassette 20 und den übrigen Teilen des Unterflurfeuers auf einem sehr niedrigen Spannungsniveau, so dass ein "heißer" Kassettenersatz ohne die Gefahr der Beschädigung der elektrischen Kontakte und ohne das Risiko eines elektrischen Schlags für das Personal durchführbar ist; das Spannungsniveau liegt hierbei unterhalb von einer Spitzenspannung von ca. 25V.

Die Kassette 20 ist oberhalb einer Energieversorgungs- und Steuereinrichtung 22 des Unterflurfeuers angeordnet.

Da die Kassette 20 weitestgehend ohne Hohlräume konstruiert ist, widersteht sie mechanischen Beanspruchungen von 100G und Schwingungsbeanspruchungen bis zu 30G, wobei es unerheblich ist, ob das Unterflurfeuer energiert oder nichtenergiert ist.

Mittels des Aufnahmeteils 21 werden auf die Kassette 20 eingeleitete Lasten und Beanspruchungen auf die Fahrbahn übertragen. Bei diesen Belastungen handelt es sich um statische und dynamische mechanische Lasten sowie um thermische Lasten, die aus dem Erfordernis der Abfuhr der erzeugten Wärme entstehen.

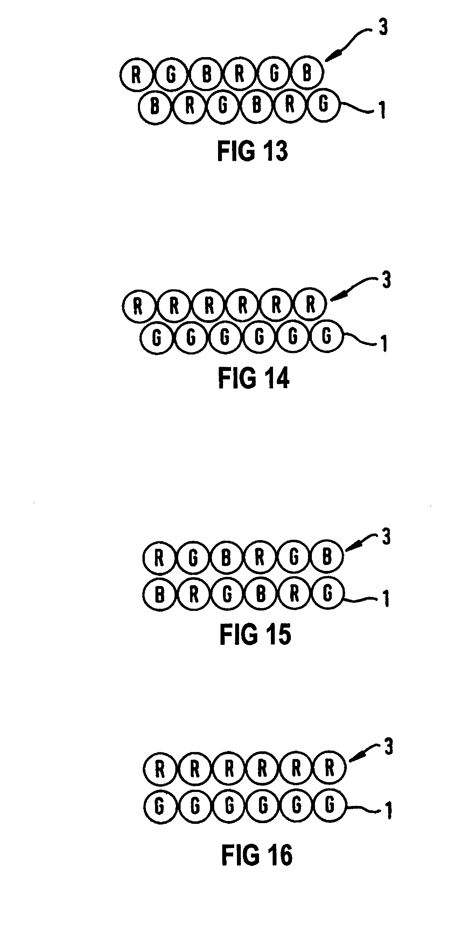

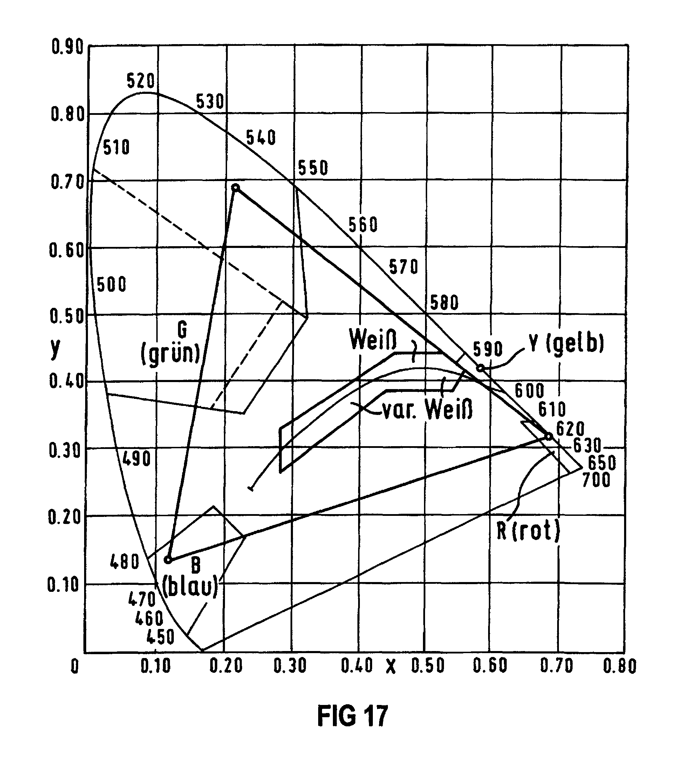

FIG 13 zeigt in Prinzipdarstellung ein Cluster 3, welches aus roten, grünen und blauen lichtabstrahlenden Dioden 1 zusammengesetzt ist. Die lichtabstrahlenden Dioden 1 jeder Farbe sind hinsichtlich der Intensität, mit der sie Licht abstrahlen, in noch zu beschreibender Weise regelbar. Dadurch, dass die lichtabstrahlenden Dioden 1 jeder der drei Farben in der jeweils gewünschten Intensität Licht abstrahlen können, kann mittels des in FIG 13 gezeigten Clusters 3 praktisch Licht in sämtlichen sichtbaren Farben abgestrahlt werden, wobei darüber hinaus dieses Licht mit unterschiedlicher Intensität abstrahlbar ist. Durch die Farben rot, grün und blau, wird, wie sich insbesondere im Zusammenhang mit FIG 17 ergibt, die Möglichkeit geschaffen, Licht jeder Intensität und in jeder für mögliche Signale denkbaren Farbe abzustrahlen.

Mit einer derartigen Ausgestaltung eines Clusters 3 kann auch weißes Licht mit unterschiedlicher Intensität abgestrahlt werden, was bei herkömmlichen Unterflurfeuern Schwierigkeiten bereitet. Dies geht darauf zurück, dass rot, grün und blau im Farbspektrum etwa an den Ecken eines Dreiecks angeordnet sind, welches den sichtbaren Farbbereich beschreibt, wie aus FIG 17 hervorgeht.

Das aus dem Cluster 3 austretende Licht ist in einer Entfernung von zwei Bogenminuten entsprechend einem Beobachtungsabstand von 10 m nicht mehr in einzelne Lichtquellen differenzierbar, so dass für jedwede Zwecke Licht in der gewünschten Farbe und Intensität geschaffen werden kann. Dies gilt insbesondere auch für die im Flugwesen geltenden Standards ICAO, FAA, DOT, CIE, MIL-C-25050.

Insbesondere für die Erzeugung variablen weißen Lichts eignet sich am besten ein Cluster 3, welches, wie bereits erwähnt, lichtabstrahlende Dioden 1 enthält, deren Licht rot, blau bzw. grün ist. Diese drei Farben sind, wie bereits erwähnt, an den äußeren Ecken des aus FIG 17 ersichtlichen Dreiecks angeordnet, welches den genannten Standards entspricht.

Zur Kennzeichnung von Taxiway-Markierungen und Routen- hinweisen für Flugzeuge sind lediglich vier Farben erforderlich, nämlich rot (R), gelb (Y), orange und grün (G). Für eine solche Anwendung ist es einfacher und weniger aufwendig, wenn ein Cluster 3 lediglich zwei unterschiedliche Arten von lichtabstrahlenden Dioden 1 enthält, nämlich solche, die rotes Licht und solche die grünes Licht abstrahlen. Ein derartiges Cluster 3 ist prinzipiell in FIG 14 dargestellt. Hierbei kann auf blaues Licht abstrahlende Dioden 1 verzichtet werden.

Die Cluster 3 gemäß Figur 15 und Figur 16 unterscheiden sich von den in FIG 13 und FIG 14 dargestellten Clustern 3 lediglich dadurch, dass die einzelnen lichtabstrahlenden Dioden 1 nicht in zueinander versetzten Reihen angeordnet sind; vielmehr sind im Falle der Cluster 3 gemäß den FIG 15 und 16 die unter- bzw. übereinander angeordneten lichtabstrahlenden Dioden 1 nicht zueinander versetzt.

Lichtabstrahlende Dioden 1 sind von unterschiedlichen Herstellern und in unterschiedlichen Farben am Markt erhältlich. So stellt beispielsweise die Firma Toshiba LED zur Abstrahlung von Licht in roter, orangener und gelber Farb her; die Firma Hewlett-Packard stellt Dioden zur Abstrahlung von Licht in bernsteinfarbener, oranger, rot-oranger und roter Farbe her; die Firma Ledtronics stellt Dioden zur Abstrahlung von Licht in grüner, gelber, oranger, roter und blauer Farbe her.

Die Steuerung der Energiezufuhr zu den lichtabstrahlenden Dioden 1 wird mit minimalen Verlusten durch eine Pulsweitenmodulationsvorrichtung 24 erreicht, wobei der Spitzenstrom in einem Initialisierungsverfahren eingestellt wird, mittels dem die Bauart der lichtabstrahlenden Diode entsprechend dem Ergebnis eines Vergleichs des Spannungsabfalls über eine Kette von lichtabstrahlenden Dioden mit dem Spannungsabfall über eine Bezugs-LED identifiziert wird.

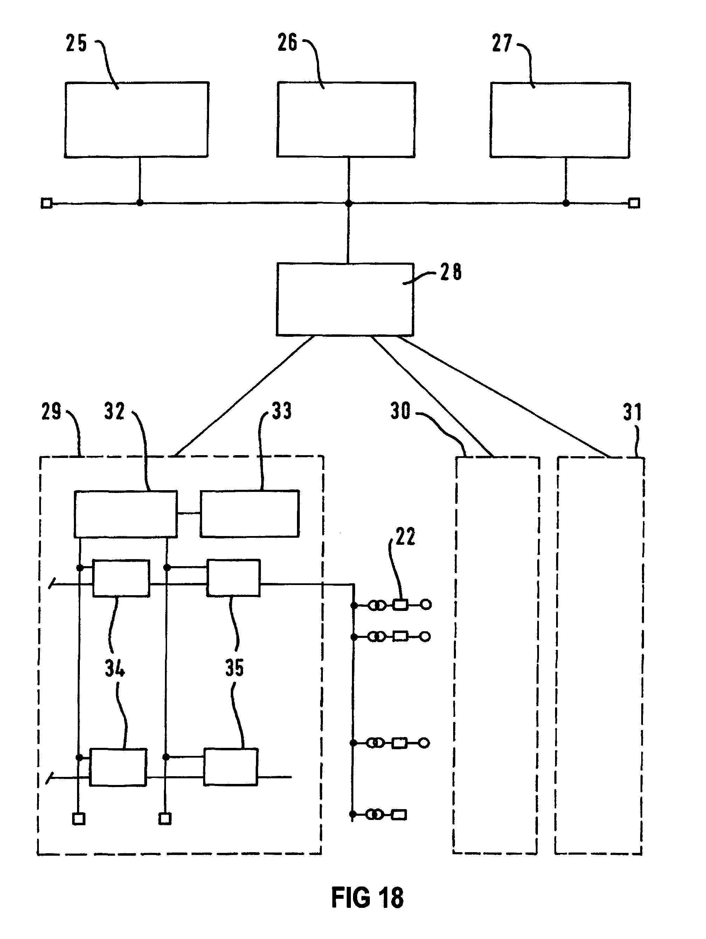

Anhand von FIG 18 wird nunmehr die Steuerung bzw. Einbeziehung und Integration der erfindungsgemäßen Unterflurfeuer ein Steuersystem eines Flughafens erläutert.

Eine Flugverkehrszentrale 25, eine Ausweichzentrale 26 sowie eine Wartungszentrale 27 sind in geeigneter Weise an eine Steuerung 28 für Fahrtrouten und Gates angeschlossen. Diese Steuerung 28 wiederum ist mit Unterstationen 29, 30, 31 verbunden, von denen in FIG 18 lediglich die Unterstation 29 eingehender dargestellt ist.

Es sei darauf hingewiesen, dass in FIG 18 eine sternförmige Verbindung zwischen der Steuerung 28 und den Unterstationen 29, 30, 31 dargestellt ist, dass es aber grundsätzlich auch möglich ist, eine Schleifenverbindung oder eine Busverbindung vorzusehen.

Die Unterstation 29 hat eine Untersteuereinrichtung 32 mit einem Panel 33. An die Untersteuereinrichtung 32 sind jeweils über ein CCR 34 und eine Masterschaltung 35 die eigentlichen Steuereinrichtungen 22 der erfindungsgemäßen Unterflurfeuer angeschlossen.

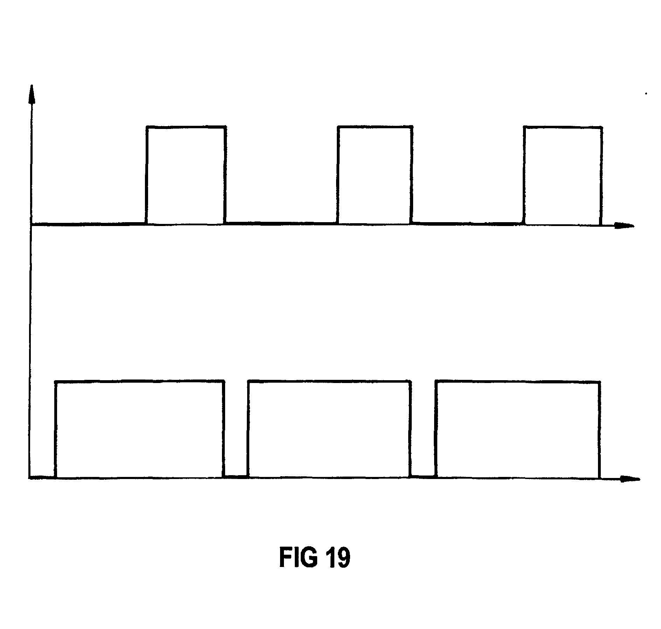

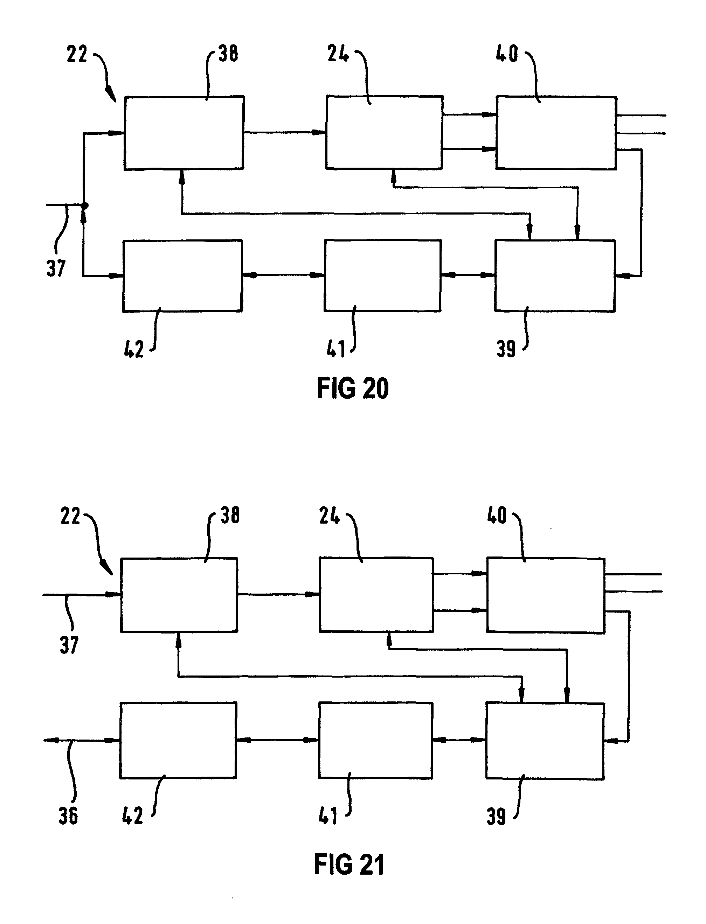

Zu der Steuereinrichtung 22, die im einzelnen in den FIG 20 und 21 dargestellt ist, gehört die bereits erwähnte Pulsweitenmodulationsvorrichtung 24. Ihre Ausgangsleistung kann variieren, wie aus FIG 19 hervorgeht, deren oberer Teil eine Ausgangsleistung der Pulsweitenmodulationsvorrichtung 24 mit niedriger Intensität und deren unterer Teil eine Ausgangsleistung der Pulsweitenmodulationsvorrichtung 24 mit hoher Intensität darstellt.

Die in den Figuren 20 und 21 dargestellten Steuereinrichtungen 22 unterscheiden sich lediglich dadurch, dass die in FIG 21 dargestellte Steuereinrichtung 22 keine separate Datenleitung 36 aufweist, sondern lediglich eine Energieversorgungsleitung 37 hat, die auch zur Datenübermittelung dient.

Zur Steuereinrichtung 22 gehört eine Leistungsadaption- und Sensoreinheit 38, die an die Pulsweitenmodulationsvorrichtung 24 und einen Controller 39 angeschlossen ist.

Die Pulsweitenmodulationsvorrichtung 24 ist ebenfalls an den Controller 39 und einen Auslasssensor 40 angeschlossen, der ebenfalls an den Controller 39 angeschlossen ist und über den die lichtabstrahlenden Dioden 1 des Unterflurfeuers angesteuert werden. Der Controller 39 ist über ein Modem 41 und einen Anschlusskreis 42 an die Energieversorgungsleitung 37 bzw. die Datenleitung 36 angeschlossen.

Als Controller 39 kann ein Gerät der Bauart Intel 8051 zum Einsatz kommen. Als Unterstationssteuereinrichtung 32 kann ein PC eingesetzt werden, wobei es sich um einen SICOMP-PC handeln kann.

Die Steuerung des Unterflurfeuers beinhaltet die Regelung der Abstrahlintensität der Dioden 1, die Auswahl derjenigen Richtung bzw. derjenigen Richtungen, in die vom Unterflurfeuer Licht abgestrahlt werden soll, die Auswahl der Farbe, in der Licht abgestrahlt werden soll, die Lichtblinkcodierung bzw. die zeitliche Aufeinanderfolge von Lichtimpulsen, einen zeitabhängig gesteuerten Ein- und/oder Aus-Betrieb, eine Überwachung der Dioden 1, eine automatische "Power on Defaultstart-up"-Auswahl und eine automatische "Fallback Default"-Auswahl bei Steuerungsausfall. Weitere optionale Merkmale sind möglich.

Die an der Steuereinrichtung 22 eingehende Eingangsleistung wird automatisch erfasst und an die Anforderungen des Unterflurfeuers angepasst.

Für den Fall einer Standard-Konstantstrom-Serienkreis-Eingangsleistung wird die Ausgangsleistung der Pulsweitenmodulationsvorrichtung 24 so angepasst, dass das für Wolframhalogen- bzw. Glühlampen typische exponentielle Ansprechverhalten geschaffen wird, so dass das erfindungsgemäße Unterflurfeuer mit herkömmlichen Unterflurfeuern in ein und demselben Kreis kombiniert werden können.

Das Modem 42 codiert die modulierten Steuersignale aus der Energieversorgungsleitung 37 oder der Datenleitung 36 und ordnet die Steuersignale zu. Alternierend moduliert und codiert das Modem 41 Überwachungssignale, die vom Unterflurfeuer kommen, um diese für ein zentrales Steuer- und Überwachungssystem verfügbar zu machen. Das Modem 41 arbeitet in zwei Richtungen, um die Steuer- und Überwachungssignale in geeigneter Weise übertragen zu können.

Bestandteil der Steuereinrichtung 22 ist ein Überwachungsteil, mittels dem das Unterflurfeuer auf Leitungsbruch, Erdschluss, Zuleitungsfehler und dergleichen überwacht wird.

Die Cluster 3 können z.B. auch mittels einer Selenzelle auf Funktionsfähigkeit überwacht werden.

## Patentansprüche

1. Unterflurfeuer zur Signalabgabe auf und zur Kennzeichnung von Verkehrsflächen, mit als Halbleiterelemente (1), z.B. als lichtabstrahlende Dioden (LED) oder als lichtabstrahlende Polymere, ausgebildeten Lichtquellen, wobei unterschiedliche Halbleiterelemente (1) in Form von Clustern, die jeweils Licht in unterschiedlichen Farben abstrahlen, vorgesehen sind, **dadurch gekennzeichnet, dass** das Unterflurfeuer als von Flugzeugen überrollbares Flughafen-Unterflurfeuer zur Befeuerung von Startbahnen, Landebahnen, Taxiways ud.dgl. geeignet ausgebildet ist und eine Steuereinrichtung (22) mit einer Pulsweitenmodulationsvorrichtung (24) aufweist, mittels der die den Halbleiterelementen (1) zugeführte elektrische Energie regelbar und damit die Intensität der Lichtabstrahlung der Halbleiterelemente (1) gesteuert variierbar ist.

2. Unterflurfeuer nach Anspruch 1, bei dem das abgestrahlte Licht unterschiedlicher Halbleiterelemente (1) mittels der Steuereinrichtung (22) beliebig mischbar ist.

3. Unterflurfeuer nach Anspruch 1 oder 2, das mittels seiner zur Steuerung und Energieversorgung dienenden Steuereinrichtung (22) schaltbar ist.

4. Unterflurfeuer nach einem der Ansprüche 1 bis 3, dessen Steuereinrichtung (22) einen elektronischen Lichtregler aufweist.

5. Unterflurfeuer nach einem der Ansprüche 1 bis 4, dessen Steuereinrichtung (22) durch eine Energieversorgungsleitung (37) und/oder eine separate elektrische oder optische Datenleitung (36) in Signalverbindung mit einer Zentraleinheit ist.

6. Unterflurfeuer nach einem der Ansprüche 1 bis 5, mittels dem Licht in mehrere Richtungen abstrahlbar ist und mittels dessen Steuereinrichtung (22) die Abstrahlrichtung bzw. die Abstrahlrichtungen auswählbar sind.

7. Unterflurfeuer nach einem der Ansprüche 1 bis 6, mittels dessen Steuereinrichtung (22) die Abstrahlintensität und die Anzahl der Licht unterschiedlicher Farbe abstrahlenden Halbleiterelemente (1) einstellbar ist, so dass mittels des Unterflurfeuers Licht beliebiger Farbe in beliebiger Intensität abstrahlbar ist.

8. Unterflurfeuer nach einem der Ansprüche 1 bis 7, mittels dessen Steuereinrichtung (22) eine bestimmte Aufeinanderfolge von Aus- und unterschiedlichen Ein-Betriebszuständen einstellbar ist.

9. Unterflurfeuer nach einem der Ansprüche 1 bis 8, mittels dessen Steuereinrichtung (22) der Betriebszustand und die Funktionsfähigkeit der Halbleiterelemente (1) überwachbar ist.

10. Unterflurfeuer nach einem der Ansprüche 1 bis 9, das rotes, grünes und blaues Licht abstrahlende Halbleiterelemente (1) aufweist, die alternierend angeordnet sind.

11. Unterflurfeuer nach einem der Ansprüche 1 bis 9, das rotes und grünes Licht abstrahlende Halbleiterelemente (1) aufweist, die alternierend angeordnet sind.

12. Unterflurfeuer nach einem der Ansprüche 1 bis 11, bei dem einander benachbarte Halbleiterelementreihen zueinander versetzt angeordnet sind.

13. Unterflurfeuer nach einem der Ansprüche 1 bis 12, bei dem 2 bis 200, vorzugsweise 2 bis 30, Halbleiterelemente (1) ein Cluster (3) bilden.

14. Unterflurfeuer nach einem der Ansprüche 1 bis 13, das als Clusteranordnung aus mehreren einzelnen Clustern (3) ausgebildet ist.

15. Unterflurfeuer nach Anspruch 14, bei dem 1 bis 30, vorzugsweise 1 bis 16, Cluster (3) eine Clusteranordnung (11, 12) bilden.

16. Unterflurfeuer nach einem der Ansprüche 1 bis 15, bei dem die Halbleiterelemente (1) eines Clusters (3) auf einem gemeinsamen Substrat (4) angeordnet sind.

17. Unterflurfeuer nach einem der Ansprüche 1 bis 16, dessen einzelne Halbleiterelemente (1) fassungsfrei ausgebildet sind.

18. Unterflurfeuer nach Anspruch 16 oder 17, bei dem das die Halbleiterelemente (1) halternde Substrat (4) auf seiner den Halbleiterelementen (1) zugewandten Seite mit einer Schicht (5) aus einem reflektierenden Werkstoff versehen ist.

19. Unterflurfeuer nach einem der Ansprüche 1 bis 18, bei dem ausgangsseitig der Halbleiterelemente (1) eine Spiegeloberfläche (10) angeordnet ist, mittels der die Abstrahlrichtung der Halbleiterelemente (1) abgelenkt wird.

20. Unterflurfeuer nach einem der Ansprüche 16 bis 19, dessen Strahlungsaustrittfläche (6) in ihren Abmessungen etwa der Fläche des die Halbleiterelemente (1) halternden Substrats (4) entspricht.

21. Unterflurfeuer nach einem der Ansprüche 1 bis 20, das bidirektional ausgebildet ist und zwei Clusteranordnungen (11, 12) aufweist, von denen jede in eine zu der der anderen entgegengesetzte Richtung Licht abstrahlt.

22. Unterflurfeuer nach einem der Ansprüche 1 bis 20, das bidirektional ausgebildet ist und zwei Clusteranordnungen (11, 12) aufweist, die in zueinander geneigten Richtungen Licht abstrahlen.

23. Unterflurfeuer nach Anspruch 21 oder 22, bei dem jede Clusteranordnung (11, 12) mehrere, z.B. drei oder fünf, nebeneinander angeordnete Cluster (3) aufweist, wobei einander benachbarte Cluster (3) jeweils einen Winkel kleiner 180 Grad einschließen.

24. Unterflurfeuer nach einem der Ansprüche 1 bis 20, das omnidirektional ausgebildet ist und gekrümmt ausgebildete und einen Kreis bzw. einen Zylindermantel bildende Clusteranordnungen aufweist.

25. Unterflurfeuer nach einem der Ansprüche 1 bis 24, dessen Halbleiterelemente (1) in Reihen bzw. Spalten angeordnet sind.

26. Unterflurfeuer nach einem der Ansprüche 1 bis 24, dessen Halbleiterelemente (1) in Kreisen bzw. Zylindern angeordnet sind.

27. Unterflurfeuer nach einem der Ansprüche 1 bis 26, dessen Halbleiterelemente einen Abstrahlabschnitt (2) in Form einer asphärischen Linse aufweisen.

28. Unterflurfeuer nach einem der Ansprüche 1 bis 27, bei dem die Halbleiterelemente (1) aus einem anorganischen oder organischen Werkstoff, insbesondere aus Kunststoff, ausgebildet sind.

29. Unterflurfeuer nach einem der Ansprüche 1 bis 28, bei dem die Cluster (3) mit einem Gehäuse (15) des Unterflurfeuers eine kompakte Einheit bilden.

30. Unterflurfeuer nach einem der Ansprüche 1 bis 29, bei dem vor den Halbleiterelementen (1) eine Abdeckplatte angeordnet ist, mittels der die von den Halbleiterelementen (1) abgestrahlten Strahlen optisch beeinflussbar sind.

31. Unterflurfeuer nach Anspruch 30, bei dem die Strahlen mittels der Abdeckplatte (7) bündel- und richtbar sind.

32. Unterflurfeuer nach Anspruch 29 oder 30, bei dem den Halbleiterelementen (1) eine Optikeinrichtung zur Strahlenbrechung und/oder Totalreflexion zugeordnet ist.

33. Unterflurfeuer nach einem der Ansprüche 30 bis 32, bei dem die Außenseite der Abdeckplatte (7) leicht reinigbar und gehärtet ist.

34. Unterflurfeuer nach Anspruch 33, bei dem die Außenseite der Abdeckplatte (7) beschichtet ist.

35. Unterflurfeuer nach einem der Ansprüche 1 bis 34, dessen Halbleiterelemente (1) in einem Füllkörper (8) eingebettet angeordnet sind.

36. Unterflurfeuer nach Anspruch 35, bei dem der Füllkörper (8) der Halbleiterelemente (1) an deren aktiver Oberfläche bzw. Lichtaustrittsöffnung (2) eine Aussparung (9) aufweist.

37. Unterflurfeuer nach Anspruch 35 oder 36, dessen Füllkörper (8) aus einem transparenten Werkstoff, z.B. einem transparenten Harz, insbesondere Epoxydharz, ausgebildet ist, dessen Brechungsindex etwa dem der Abdeckplatte (7) entspricht.

38. Unterflurfeuer nach einem der Ansprüche 1 bis 37, bei dem ein oder mehrere Cluster (3) des Unterflurfeuers als auswechselbare Teileinheit, insbesondere als Kassette (20), ausgebildet ist bzw. sind.

39. Unterflurfeuer nach Anspruch 38, bei dem die Kassette (20) typcodiert ist.

40. Unterflurfeuer nach Anspruch 39, bei dem an der Außenseite der Kassette (20) Vorsprünge bzw. Vertiefungen ausgebildet sind, die Vertiefungen bzw. Vorsprüngen an der die Kassette (20) aufnehmenden Halterung (21) des Unterflurfeuers zugeordnet sind.

41. Unterflurfeuer nach einem der Ansprüche 38 bis 40, bei dem der Grundkörper bzw. das Gehäuse der Kassette (20) mit einem elektrisch nichtleitenden Werkstoff, z.B. Harz oder Kunststoff, ganz oder teilweise gefüllt ist.

42. Unterflurfeuer nach einem der Ansprüche 38 bis 41, bei dem dem elektrisch nichtleitenden Werkstoff ein nichtleitender Füllstoff, z.B. Glas, beigegeben ist.

43. Unterflurfeuer nach einem der Ansprüche 38 bis 42, bei dem die Wände, insbesondere eine Bodenwand des Grundkörpers bzw. des Gehäuses der Kassette (20), als Wärmeleiter, z.B. aus rostfreiem Stahl oder Aluminium, ausgebildet sind bzw. ist.

44. Unterflurfeuer nach einem der Ansprüche 38 bis 43, bei dem die Außenseite der Kassette (20), zumindest an den Hauptbeanspruchungsbereichen, mit einer Härtung versehen ist.

45. Unterflurfeuer nach einem der Ansprüche 1 bis 44, dessen Grundkörper bzw. Gehäuse aus einem nichtmetallischen und elektrisch nichtleitenden Werkstoff ausgebildet ist.

## Claims

1. Flush-marker light for signalling on and identifying traffic areas, having light sources designed as semiconductor elements (1), for example as light-emitting diodes (LEDs) or as light-emitting polymers, different semiconductor elements (1) being provided in the form of clusters which in each case emit light of different colours, **characterized in that** the flush-marker light is suitably designed as an airport flush-marker light which can be rolled over by aircraft and is intended for lighting take-off runways, landing runways, taxiways and the like and has a control device (22) with a pulse-width-modulation device (24) by means of which the electrical energy fed to the semiconductor elements (1) can be regulated, and the intensity of the light emission of the semiconductor elements (1) can thereby be varied in a controlled fashion.

2. Flush-marker light according to Claim 1, in which the emitted light of different semiconductor elements (1) can be mixed at will by means of the control device (22).

3. Flush-marker light according to Claim 1 or 2, which can be switched by means of its control device (22) which serves the purpose of control and power supply.

4. Flush-marker light according to one of Claims 1 to 3, whose control device (22) has an electronic light regulator.

5. Flush-marker light according to one of Claims 1 to 4, whose control device (22) is connected for signalling purposes to a central unit by means of a power supply line (37) and/or a separate electric or optical data line (36).

6. Flush-marker light according to one of Claims 1 to 5, by means of which the light can be emitted in a plurality of directions, and by means of whose control device (22) it is possible to select the direction of emission or the directions of emission.

7. Flush-marker light according to one of Claims 1 to 6, by means of whose control device (22) the intensity of emission and the number of the semiconductor elements (1) emitting light of different colour can be set such that light of arbitrary colour can be emitted with arbitrary intensity by means of the flush-marker light.

8. Flush-marker light according to one of Claims 1 to 7, by means of whose control device (22) it is possible to set a specific sequence of off and different on operating states.

9. Flush-marker light according to one of Claims 1 to 8, by means of whose control device (22) the operating state and the serviceability of the semiconductor elements (1) can be monitored.

10. Flush-marker light according to one of Claims 1 to 9, which has semiconductor elements (1) which emit red, green and blue light and are arranged alternately.

11. Flush-marker light according to one of Claims 1 to 9, which has semiconductor elements (1) which emit red and green light and are arranged alternately.

12. Flush-marker light according to one of Claims 1 to 11, in which mutually adjacent semiconductor element rows are arranged offset from one another.

13. Flush-marker light according to one of Claims 1 to 12, in which 2 to 200, preferably 2 to 30, semiconductor elements (1) form a cluster (3).

14. Flush-marker light according to one of Claims 1 to 13 which is designed as a cluster arrangement made from a plurality of individual clusters (3).

15. Flush-marker light according to Claim 14, in which 1 to 30, preferably 1 to 16, clusters (3) form a cluster arrangement (11, 12).

16. Flush-marker light according to one of Claims 1 to 15, in which the semiconductor elements (1) of a cluster (3) are arranged on a common substrate (4).

17. Flush-marker light according to one of Claims 1 to 16, whose individual semiconductor elements (1) are designed without holders.

18. Flush-marker light according to Claim 16 or 17, in which the substrate (4) holding the semiconductor elements (1) is provided on its side facing the semiconductor elements (1) with a layer (5) made from a reflecting material.

19. Flush-marker light according to one of Claims 1 to 18, in which there is arranged on the output side of the semiconductor elements (1) a mirror surface (10) by means of which the direction of emission of the semiconductor elements (1) is deflected.

20. Flush-marker light according to one of Claims 16 to 19, the dimensions of whose radiation exit surface (6) correspond approximately to the area of the substrate (4) holding the semiconductor elements (1).

21. Flush-marker light according to one of Claims 1 to 20, which is of bidirectional design and has two cluster arrangements (11, 12), of which each emits light in a direction opposite to that of the other.

22. Flush-marker light according to one of Claims 1 to 20, which is of bidirectional design and has two cluster arrangements (11, 12) which emit light in mutually inclined directions.

23. Flush-marker light according to Claim 21 or 22, in which each cluster arrangement (11, 12) has a plurality of, for example three or five, clusters (3) arranged next to one another, mutually adjacent clusters (3) enclosing an angle of less than 180 degrees in each case.

24. Flush-marker light according to one of Claims 1 to 20 which is of omnidirectional design and of curved design and has cluster arrangements forming a circle or a cylinder envelope.

25. Flush-marker light according to one of Claims 1 to 24, whose semiconductor elements (1) are arranged in rows and columns.

26. Flush-marker light according to one of Claims 1 to 24, whose semiconductor elements (1) are arranged in circles or cylinders.

27. Flush-marker light according to one of Claims 1 to 26, whose semiconductor elements have an emitting section (2) in the shape of an aspherical lens.

28. Flush-marker light according to one of Claims 1 to 27, in which the semiconductor elements (1) are constructed from an inorganic or organic material, in particular from plastic.

29. Flush-marker light according to one of Claims 1 to 28, in which the clusters (3) form a compact unit with a housing (15) of the flush-marker light.

30. Flush-marker light according to one of Claims 1 to 29, in which there is arranged in front of the semiconductor elements (1) a cover plate by means of which the beams emitted by the semiconductor elements (1) can be influenced optically.

31. Flush-marker light according to Claim 30, in which the beams can be focused and directed by means of the cover plate (7).

32. Flush-marker light according to Claim 29 or 30, in which an optical device for beam diffraction and/or total reflection is assigned to the semiconductor elements (1).

33. Flush-marker light according to one of Claims 30 to 32, in which the outside of the cover plate (7) can easily be cleaned and cured.

34. Flush-marker light according to Claim 33, in which the outside of the cover plate (7) is coated.

35. Flush-marker light according to one of Claims 1 to 34, whose semiconductor elements (1) are arranged embedded in a filler body (8).

36. Flush-marker light according to Claim 35, in which the filler body (8) of the semiconductor elements (1) has a cutout (9) at their active surface or light exit aperture (2).

37. Flush-marker light according to Claim 35 or 36, whose filler body (8) is constructed from a transparent material, for example a transparent resin, in particular epoxy resin, the refractive index of which corresponds approximately to that of the cover plate (7).

38. Flush-marker light according to one of Claims 1 to 37, in which one or more clusters (3) of the flush-marker light is/are designed as exchangeable subunit, in particular as a cassette (20).

39. Flush-marker light according to Claim 38, in which the cassette (20) is type coded.

40. Flush-marker light according to Claim 39, in which there are constructed on the outside of the cassette (20) projections and depressions, respectively, which are assigned to depressions and projections, respectively, on the holder (21), accommodating the cassette (20), of the flush-marker light.

41. Flush-marker light according to one of Claims 38 to 40, in which the basic body or the housing of the cassette (20) is filled entirely or partially with an electrically nonconducting material, for example resin or plastic.

42. Flush-marker light according to one of Claims 38 to 41, in which a nonconducting filler, for example glass, is added to the electrically nonconducting material.

43. Flush-marker light according to one of Claims 38 to 42, in which the walls, in particular a bottom wall of the basic body or the housing of the cassette (20) are or is constructed as thermal conductor, for example made from stainless steel or aluminium.

44. Flush-marker light according to one of Claims 38 to 43, in which the outside of the cassette (20) is provided with a hardened portion, at least on the regions principally stressed.

45. Flush-marker light according to one of Claims 1 to 44, whose basic body or housing is constructed from a nonmetallic and electrically nonconducting material.

## Revendications

1. Plot lumineux encastré pour la signalisation et la caractérisation de zones de circulation comprenant des sources de lumière constituées en éléments (1) à semiconducteur, par exemple en diodes émettant de la lumière (LED) ou en polymère émettant de la lumière, dans lequel il est prévu des éléments (1) à semiconducteur différents sous forme d'essaims qui émettent respectivement de la lumière en des couleurs différentes, **caractérisé en ce que** le plot lumineux encastré est constitué sous la forme de plot lumineux encastré pour aérodrome sur lesquels peuvent rouler des avions et destiné à baliser des pistes d'envol, des pistes d'atterrissage, des pistes de roulement et analogues, et comprend un dispositif de commande (22) ayant un dispositif (24) à modulation en largeur d'impulsion au moyen duquel l'énergie électrique envoyée aux éléments (1) à semiconducteur peut être réglée et l'intensité du rayonnement de lumière des éléments (1) à semiconducteur peut être ainsi modifiée d'une manière commandée.

2. Plot lumineux encastré suivant la revendication 1, dans lequel la lumière émise d'éléments (1) à semiconducteur différents peut être mélangée à volonté au moyen du dispositif de commande (22).

3. Plot lumineux encastré suivant la revendication 1 ou 2, qui peut être branché au moyen du dispositif de commande (22) servant à la commande et à l'alimentation en énergie.

4. Plot lumineux encastré suivant l'une des revendications 1 à 3, dont le dispositif de commande (22) comprend un régulateur électronique de lumière.

5. Plot lumineux encastré suivant l'une des revendications 1 à 4, dont le dispositif de commande (22) est en liaison de signal avec une unité centrale par une ligne (37) d'alimentation en énergie et/ou par une ligne (36) distincte électrique ou optique de données.

6. Plot lumineux encastré suivant l'une des revendications 1 à 5, au moyen duquel de la lumière peut être émise dans plusieurs directions et au moyen du dispositif de commande (22) duquel on peut choisir la direction de rayonnement ou les directions de rayonnement.

7. Plot lumineux encastré suivant l'une des revendications 1 à 6, au moyen du dispositif de commande (22) duquel on peut régler l'intensité du rayonnement et le nombre des éléments (1) à semiconducteur émettant de la lumière de couleur différente, de sorte que l'on peut émettre au moyen du plot lumineux encastré de la lumière de n'importe quelle couleur en n'importe quelle intensité.

8. Plot lumineux encastré suivant l'une des revendications 1 à 7 au moyen du dispositif de commande (22) duquel on peut établir une succession déterminée d'états de fonctionnement débranchés et branchés différents.

9. Plot lumineux encastré suivant l'une des revendications 1 à 8 au moyen du dispositif de commande (22) duquel on peut surveiller l'état de fonctionnement et l'aptitude à fonctionner des éléments (1) à semiconducteur.

10. Plot lumineux encastré suivant l'une des revendications 1 à 9, qui a des éléments (1) à semiconducteur qui émettent de la lumière rouge, de la lumière verte et de la lumière bleue et qui sont disposés en alternance.

11. Plot lumineux encastré suivant l'une des revendications 1 à 9, qui comprend des éléments (1) à semiconducteur qui émettent de la lumière rouge et de la lumière verte et qui sont disposés en alternance.

12. Plot lumineux encastré suivant l'une des revendications 1 à 11, dans lequel des rangées voisines d'éléments à semiconducteur sont disposées de manière décalée l'une par rapport à l'autre.

13. Plot lumineux encastré suivant l'une des revendications 1 à 12, dans lequel de 2 à 200 et de préférence de 2 à 30 éléments (1) à semiconducteur forment un essaim (3).

14. Plot lumineux encastré suivant l'une des revendications 1 à 13, qui est constitué en dispositif en essaim constitué de plusieurs essaims (3) individuels.

15. Plot lumineux encastré suivant la revendication 14, dans lequel de 1 à 30 et de préférence de 1 à 16 essaims (3) forment un dispositif (11, 12) à essaim.

16. Plot lumineux encastré suivant l'une des revendications 1 à 15, dans lequel les éléments (1) à semiconducteur d'un essaim (3) sont disposés sur un substrat (4) commun.

17. Plot lumineux encastré suivant l'une des revendications 1 à 16, dont les éléments (1) à semiconducteur individuel sont constitués sans monture.

18. Plot lumineux encastré suivant la revendication 16 ou 17, dans lequel le substrat (4) maintenant les éléments (1) à semiconducteur est muni sur sa face tournée vers les éléments (1) à semiconducteur d'une couche (5) en un matériau réfléchissant.

19. Plot lumineux encastré suivant l'une des revendications 1 à 18, dans lequel il est monté du côté de la sortie des éléments (1) à semiconducteur d'une surface (10) formant miroir au moyen de laquelle la direction de rayonnement des éléments (1) à semiconducteur est déviée.

20. Plot lumineux encastré suivant l'une des revendications 16 à 19, dont les dimensions de la surface (6) de sortie du rayonnement correspondent à peu près à la surface du substrat (4) maintenant les éléments (1) à semiconducteur.

21. Plot lumineux encastré suivant l'une des revendications 1 à 20, qui est constituée de façon bidirectionnelle et qui a deux dispositifs (11, 12) à essaim, chacun d'entre eux rayonnant de la lumière dans une direction opposée à l'autre.

22. Plot lumineux encastré suivant l'une des revendications 1 à 20, qui est constituée de façon bidirectionnelle et qui a deux dispositifs (11, 12) à essaim qui rayonnent de la lumière dans des directions inclinées l'une par rapport à l'autre.

23. Plot lumineux encastré suivant la revendication 21 ou 22, dans lequel chaque dispositif (11, 12) à essaim comprend plusieurs, par exemple 3 ou 5 essaims, (3) côte à côte, des essaims (3) voisins l'un de l'autre faisant respectivement un angle inférieur à 180°.

24. Plot lumineux encastré suivant l'une des revendications 1 à 20, qui est constitué de manière omnidirectionnelle et qui comprend des dispositifs à essaim incurvés et formant un cercle ou une surface latérale de cylindre.

25. Plot lumineux encastré suivant l'une des revendications 1 à 24, dont les éléments (1) à semiconducteur sont disposés en rangées et en colonnes.

26. Plot lumineux encastré suivant l'une des revendications 1 à 24, dont les éléments (1) à semiconducteur sont disposés en cercle ou en cylindre.

27. Plot lumineux encastré suivant l'une des revendications 1 à 26, dont les éléments à semiconducteur ont une partie (2) de rayonnement sous la forme d'une lentille asphérique.

28. Plot lumineux encastré suivant l'une des revendications 1 à 27, dans lequel les éléments (1) à semiconducteur sont en un matériau minéral ou organique, notamment en une matière plastique.

29. Plot lumineux encastré suivant l'une des revendications 1 à 28, dans lequel les essaims (3) forment, avec un boîtier du plot lumineux encastré une unité peu encombrante.

30. Plot lumineux encastré suivant l'une des revendications 1 à 29, dans lequel il est disposé devant les éléments (1) à semiconducteur une plaque de recouvrement au moyen de laquelle on peut influencer d'un point de vue optique les rayonnements émis par les éléments (1) à semiconducteur.

31. Plot lumineux encastré suivant la revendication 30, dans lequel les rayonnements peuvent être focalisés et dirigés au moyen de la plaque (7) de recouvrement.

32. Plot lumineux encastré suivant la revendication 29 ou 30, dans lequel il est associé aux éléments (1) à semiconducteur un dispositif optique de réfraction et/ou réflexion totale.

33. Plot lumineux encastré suivant l'une des revendications 30 à 32, dans lequel la face extérieure de la plaque (7) de recouvrement peut être nettoyée facilement et durcie.

34. Plot lumineux encastré suivant la revendication 33, dans lequel la face extérieure de la plaque (7) de recouvrement est revêtue.

35. Plot lumineux encastré suivant l'une des revendications 1 à 34, dont les éléments (1) à semiconducteur sont incorporés dans un corps (8) de remplissage.

36. Plot lumineux encastré suivant la revendication 35, dans lequel le corps (8) de remplissage des éléments (1) à semiconducteur a, sur sa surface active ou sur son ouverture (2) de sortie de la lumière, un évidement (9).

37. Plot lumineux encastré suivant la revendication 35 ou 36, dont le corps (8) de remplissage est en un matériau transparent, par exemple en une résine transparente, notamment en résine époxyde dont l'indice de réfraction correspond à peu près à celui de la plaque (7) de recouvrement.

38. Plot lumineux encastré suivant l'une des revendications 1 à 37, dans lequel un ou plusieurs essaims (3) du plot lumineux encastré sont constitués sous la forme de sous-unités, notamment sous la forme de cassettes (20) qui peuvent être remplacées.

39. Plot lumineux encastré suivant la revendication 38, dans lequel la cassette (20) est à codage par type.

40. Plot lumineux encastré suivant la revendication 39, dans lequel il est constitué sur la face extérieure de la cassette (20) des saillies ou des cavités, les saillies ou les cavités étant associées à la pièce de maintien (21) qui reçoit la cassette (20).

41. Plot lumineux encastré suivant l'une des revendications 38 à 40, dans lequel l'embase ou le corps de la cassette (20) est empli en tout ou partie d'un matériau qui n'est pas conducteur de l'électricité, par exemple de résine ou de manière plastique.

42. Plot lumineux encastré suivant l'une des revendications 38 à 41, dans lequel le matériau qui n'est pas conducteur de l'électricité est additionné d'une charge non conductrice, par exemple de verre.

43. Plot lumineux encastré suivant l'une des revendications 38 et 42, dans lequel les parois, notamment une paroi de fond de l'embase ou du corps de la cassette (20) est constituée en caloporteur, par exemple en acier inoxydable ou en aluminium.

44. Plot lumineux encastré suivant l'une des revendications 38 à 43, dans lequel la face extérieure de la cassette (20) est munie, au moins dans les parties qui sont soumises principalement à des contraintes, d'une cémentation.

45. Plot lumineux encastré suivant l'une des revendications 1 à 44, dont l'embase ou le corps est en un matériau non métallique et non conducteur de l'électricité.
